(19) Europäisches Patentamt
European Patent Office
Office européen des brevets

(11) Publication number: **0 018 974 B1**

(12) **EUROPEAN PATENT SPECIFICATION**

(45) Date of publication of patent specification: **31.08.83**

(51) Int. Cl.³: **C 01 B 13/02**, C 01 B 3/08, C 22 C 7/00

(21) Application number: **79900504.6**

(22) Date of filing: **04.05.79**

(86) International application number: **PCT/US79/00295**

(87) International publication number: **WO 79/01031 29.11.79 Gazette 79/24**

# (54) MATERIAL AND METHOD FOR DISSOCIATION OF WATER.

(30) Priority: **04.05.78 US 902708**
**04.05.78 US 902705**

(43) Date of publication of application: **26.11.80 Bulletin 80/24**

(45) Publication of the grant of the patent: **31.08.83 Bulletin 83/35**

(84) Designated Contracting States: **FR**

(56) References cited:
**FR - A - 392 725**
**FR - A - 2 101 384**
**GB - A - 3 188**
**IT - A - 355 342**
**US - A - 2 837 408**
**US - A - 2 991 176**
**US - A - 3 313 598**
**US - A - 3 343 948**
**US - A - 3 490 871**
**US - A - 3 540 854**
**US - A - 3 833 357**
**US - A - 3 928 550**
**US - A - 3 985 866**

(73) Proprietor: **ANDERSON, Eugene R.**
**322 Gipsy Road**
**Welling, Kent DA16 1JJ (GB)**

(72) Inventor: **ANDERSON, Eugene R.**
**322 Gipsy Road**
**Welling, Kent DA16 1JJ (GB)**

(74) Representative: **Lavoix, Jean et al,**
**c/o Cabinet Lavoix 2, Place D'Estienne D'Orves**
**F-75441 Paris Cedex 09 (FR)**

**EP 0 018 974 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

# Material and method for dissociation of water

This invention relates to a material for and method of effecting the decomposition/dissociation of water to form hydrogen. The water is reacted with amalgam of an alkali metal (such as lithium, sodium, potassium, cesium or combinations thereof), aluminum and mercury to form hydrogen and a metallic hydroxide believed to be $Na_3AL(OH)_6$ in the case where sodium is used as alkali metal.

This invention relates also to a material for a method of effecting the decomposition/dissociation of water into hydrogen and oxygen. oxygen.

The water is reacted with an amalgam of an alkali metal (such as sodium), aluminum and mercury to form hydrogen and a metallic hydroxide believed to be $Na_3AL(OH)_6$. The $Na_3AL(OH)_6$ is unstable at the temperature of formation in the presence of a catalyst comprising platinum and at least one element selected from the group consisting of germanium, antimony, gallium, thallium, indium, cadmium, bismuth, lead, zinc and tin and breaks down to form metallic sodium and aluminum thereby releasing oxygen and hydrogen.

It is well known that alkali metals react with water to form hydrogen and the stable alkali hydroxide. The foregoing reaction is rapid, the heat generated intense and the hydrogen formed generally ignites with explosive force.' The result is an unsatisfactory and dangerous method of generating hydrogen. Moreover, the resulting alkali metal hydroxide is very stable and regeneration to form the alkali metal is not practical from an economic standpoint.

A simple and facile method of producing hydrogen without spontaneous combustion of the resultant evolved hydrogen where an alkali metal is used has not heretofore been developed.

It is also well known that alkali metal peroxides may be used for the generation of oxygen (see US—A—3,574,561).

Thermochemical cycles comprising metal-metaloid combinations for the generation of both hydrogen and oxygen are disclosed in US—A—3,969,495.

Closed cycle processes for dissociation of water into hydrogen and oxygen are disclosed in US—A—3,821,358, 3,928,549 and 4,011,305. Further, US—A—3,985,866 discloses the production of hydrogen under high pressure by reacting molten droplets of an alloy comprising aluminum and an alkali metal with water. FR—A—2,101,384 discloses the production of hydrogen by reacting an amalgam of aluminum with water.

Combinations of various metals in multistep processes for dissociation of water are, therefore, well known; however, the simple and facile manner of producing hydrogen and oxygen utilizing an amalgam of alkali metal, aluminum and mercury combined with a catalytic alloy consisting of platinum and at least one element selected from the group consisting of germanium, antimony, gallium, thallium, indium, cadmium, bismuth, lead, zinc, and tin has not been heretofore appreciated.

In its broadest aspect, the material found as suitable for generation of hydrogen from water without spontaneous combustion of the resultant evolved hydrogen consists of an amalgam of an alkali metal, mercury and aluminum, wherein the atomic ratio of alkali metal to mercury is from 1:100 to 100:1 and the atomic ratio of alkali metal to aluminum is from 1:100 to 100:1, possibly combined with an alloy of platinum and at least one element selected from the group consisting of germanium, antimony, gallium, thallium, indium, cadmium, bismuth, lead, zinc and tin.

Although not wishing to be bound by the following explanation, it is believed that the water reacts with the alkali metal, e.g., sodium, and the aluminum liberating hydrogen to form $Na_3AL(OH)_6$. The reaction of the water with the amalgam is substantially different from the reaction of the alkali metal component of the amalgam with water. The heat generated by reaction of equivalent amounts of alkali metal in the form of the amalgam is substantially less than where the alkali metal alone is reacted with water. Accordingly, spontaneous combustion of the hydrogen in an oxidizing environment as well as the formation of a highly stable alkali metal product is avoided where the amalgam of the invention is employed in place of the alkali metal alone.

The process may be depicted in the case of sodium, as follows:

$$2\ Na+2\ H_2O \rightarrow 2\ NaOH+H_2$$

$$6\ H_2O+Al+6\ NaOH \rightarrow 2\ Na_3Al(OH)_6+3\ H_2$$

The amalgam of an alkali metal such as sodium, aluminum and mercury is prepared utilizing any known procedure for amalgamation with the added important proviso that an inert atmosphere be maintained during amalgamation. Amalgamation may be facilitated by utilization of an elevated temperature preferably around 200°C±10°C. The amalgam is preferably maintained at this elevated temperature for about 10 minutes where 100 grams are being processed and the time is extended about a minute for each additional 100 gram aliquot.

The resulting amalgam is cooled, generally to room temperature, utilizing an inert atmosphere. For this purpose, either helium or nitrogen are satisfactory. Cooling is preferably effected in a dessicator to insure that no water contacts the amalgam.

Upon cooling, the amalgam solidifies and may be contacted with water by submersion, by spraying the water thereupon, by impinging water in the form of steam thereon or in any other manner. Contact of water at a temperature above 0°C produces evolution of hydrogen.

Examples of suitable amalgams are as follows:

Aluminum 37.7 weight per cent, sodium 32.1 weight per cent and mercury 30.2 weight per cent.

Aluminum 22.9 weight per cent, sodium 18.4 weight per cent, mercury 58.7 weight per cent.

Aluminum 19.4 weight per cent, sodium 31.1 weight per cent, mercury 49.5 weight per cent.

The material I have found to be suitable for the generation of hydrogen and oxygen from water without spontaneous combustion of the resultant evolved hydrogen and oxygen gases consists of an amalgam of (1) an alkali metal such as lithium, sodium, potassium, cesium, or combinations thereof, (2) aluminum and (3) mercury combined with a catalytic alloy comprising platinum and at least one element selected from the group consisting of germanium, antimony, gallium, thallium, indium, cadmium, bismuth, lead, zinc and tin.

The particle size of the sodium and aluminum is such as to enable formation of an amalgam and may fall within the range of from 1.7 mm to 0.15 mm. Most preferably, the particle size of the aluminum should be about 1.7 mm. Alkali metal of 0.4 mm diameter is suitable. The particle size of either the alkali metal or aluminum is not critical since the foregoing metals and mercury readily intermix. The smaller the particle size, of course, the more rapid the mixing.

Preferably the atomic weight ratio of alkali metal to mercury is from 3:1 to 1:1.5 and the atomic weight ratio of alkali metal to aluminum is from 1:1 to 3:1.

The amalgam of alkali metal, aluminum and mercury is combined with a catalytically active alloy which is present in a catalytically effective amount and, at the conditions of hydrogen generation, functions to regenerate amalgam to the active metallic state.

It is essential that the catalyst/alloy contain a platinum group metal and specifically platinum. The catalyst/alloy consists of platinum and at least one element selected from the group consisting of germanium, antimony, gallium, thallium, indium, cadmium, bismuth, lead, zinc and tin.

Preferably the catalyst comprising platinum and at least one element selected from the group consisting of germanium, antimony, gallium, thallium, indium and cadmium.

Catalytic activity is further enhanced by the addition of minor amounts of zirconium and chromium.

Lead and/or gold may be incorporated in the catalyst as an alloying element to lower the melting point of the alloy.

The alloy and amalgam may be combined in weight ratios of from 1:1 to 1:5 and preferably from 1:2 to 1:3.

In combining the alloy and amalgam they may be compounded with an extender. The extender functions both to dilute the amalgam-catalytic alloy combination and to provide a heat sump for heat generated during the dissociation of water by contact with the combined amalgam and catalytic alloy. The extender is preferably copper; however, admixtures of tin and bismuth or gallium may also function as extenders.

The combination of amalgam and alloy or amalgam, alloy and extender is most suitably used in solid block form, hereinafter referred to as a reactor block. Where an extender is employed it may be present as a major constituent of the reactor block.

Although not wishing to be bound by the following explanation, it is believed that the water reacts with the alkali metal, e.g., sodium, and the aluminum liberating hydrogen and forming $Na_3AL(OH)_6$. The $Na_3AL(OH)_6$ is unstable, and in the presence of the alloy at the conditions of $Na_3AL(OH)_6$ formation, the foregoing composition decomposes to form $H_2$, $O_2$ and regenerated amalgam. The alloy apparently functions to catalyze the decomposition, and thereby extends the useful life of the amalgam. The process may be depicted as follows:

$$2\ Na+2\ H_2O \rightarrow 2\ NaOH+H_2$$

$$6\ H_2O+2\ Al+6\ NaOH \rightarrow 2\ Na_3Al(OH)_6+3\ H_2$$

$$Na_3Al(OH)_6 \xrightarrow[\text{catalytic alloy}]{} 3\ Na+Al+3\ H_2+3\ O_2$$

It is preferred to include chromium as an additional component of the alloy. The incorporation of chromium as a component of the alloy appears to lower the heat of reaction. The chromium is generally present in the alloy in an amount measured on a weight per cent basis of said alloy of from 0.7% to 1.1% and preferably for 0.8% to 0.9%.

The preferred alloy comprises (1) platinum present in an amount of from 0.7 to 1.1% by weight, (2) lead present in the amount of from 42.9 to 71.5% by weight, (3) antimony present in an amount of from 25.5 to 42.5% by weight, (4) chromium present in an amount of from 0.7 to 1.1% by weight, (5) zirconium present in an amount of from 4.1 to 6.8% by weight and gold present in an amount of from 1.1 to 1.9% by weight.

A specific example of said preferred alloy comprises about 0.9 wt. % platinum, about 57.3 wt. % lead, about 34.0 wt. % antimony, about 0.9 wt. % chromium, about 5.4 wt. % zirconium and about 1.5 wt. % gold.

As in the preparation of the amalgam and all other steps in the method of manufacture of the various compositions of this invention, precaution must be taken during preparation to avoid the presence of oxygen because it has been observed that oxygen operates to poison the resultant material.

The preparation of the alloy selected may be effected in any well known manner having in mind the proviso that an inert atmosphere be maintained.

The alloy, upon solidification, and as a practical matter, upon cooling is ground into a powder, preferably a fine powder of about 1.7 mm or less. Cooling may be effected in a dessicator to insure the absence of oxygen and moisture, whose presence is detrimental during preparation. Grinding/pulverizing may be effected in any well known manner including use of a ball, hammer and/or stamp mill.

The objective in combining the alloy and amalgam is to intimately admix the two respective components. The specific manner of catalysis is not known, but generally catalysis is a surface phenomenon and consistent therewith in the instant invention it appears that the catalysis is related to both particle size and nature as well as uniformity of mixture of the amalgam and catalytic alloy.

The amalgam and catalytic alloy may be used (1) in particulate form such as a floating bed, or other intimate dispersion, (2) in the form of porous mass which may be formed by compression or sintering or (3) as a solid mass by alloying of the amalgam and catalytic alloy. By alloying, it meant that the amalgam and catalytic alloy are combined to form an admixture and alloyed under inert conditions at a temperature above the melting point of said admixture.

In either of the foregoing forms an extender, such as gallium, tin, bismuth or copper, and preferably copper may be utilized. The extender functions to vary activity and as a heat sink to retain at least a portion of the heat of reaction of for example sodium aluminum hydroxide formation, whereby catalysis of the unstable hydroxide to the metal and oxygen and hydrogen is enhanced.

Admixture of extender with the amalgam and catalytic alloy is effected utilizing the extender in a particulate form of comparable size to the other components, which size is generally from 1.7 mm to 0.15 mm.

Example 1

Preparation of amalgam

35.144 parts by weight of sodium, 13.749 parts by weight of aluminum and 51.107 parts by weight of mercury are formed into an amalgam in an inert atmosphere of nitrogen at an elevated temperature of 200°C in a graphite crucible.

The resulting amalgam is cooled to room temperature in a dessicator in an inert nitrogen atmosphere. Thereafter, the amalgam is formed which is a solid but which will liquefy upon agitation.

It is important to note that the amalgam should be prepared in an inert gas atmosphere to prevent premature hydroxide formation.

Use of amalgam

The amalgam is placed in a suitable container with one surface thereof exposed. Water is sprayed upon the exposed surface or alternatively the exposed surface may be covered entirely with a layer of water. It is necessary that the amalgam be placed within a container because in the course of contact of the amalgam with water the heat generated during the course of hydrogen generation transforms the amalgam to liquid form. The amalgam regardless of how it is contacted with water will not cause an explosion.

Example 2

Preparation of amalgam

The amalgam as prepared in Example 1 is formed into a fine powder of about 1.7 mm utilizing a ball mill. Grinding is effected in an inert atmosphere of nitrogen.

Preparation of catalytic alloy

19.0 parts by weight lead, 11.3 parts by weight antimony, 0.3 parts by weight platinum, 0.5 parts by weight gold, 1.8 parts by weight zirconium and 0.3 parts by weight chromium are introduced into a graphite crucible which is thereafter placed in an oven and heated to melting in an inert atmosphere of helium to form an alloy of said metals.

The resulting alloy is cooled in a dessicator to about room temperature in an inert helium atmosphere. Thereafter the alloy is formed into a fine powder of about 1.7 mm or less utilizing a ball mill. Grinding is effected in an inert atmosphere of helium.

The inert atmosphere is used to prevent oxidation of the alloy.

Formation of intimate amalgam and catalytic alloy admixture

Three parts by weight of powdered amalgam is admixed with one part by weight powdered alloy in an inert atmosphere to obtain a uniform mixture of the amalgam and catalytic alloy.

The admixture may be utilized by passing steam upwardly therethrough whereby steam is dissociated into hydrogen and oxygen.

Formation of reactor block comprising amalgam and catalytic alloy

Three parts by weight of powdered amalgam is admixed with one part by weight powdered alloy. The weighing and blending is effected in an inert atmosphere.

After blending to provide a uniform mixture, the resultant mixture is compressed to form a solid mass by application of pressure of about

27.6.$10^7$ Pa in a graphite mold conforming to the desired shape of the finished product. The mold utilized produces a cubical block.

The resulting block is heated to an elevated temperature of about 10°C above the melting point of the mass and maintained at said temperatures for about 10±1 minutes. In the oven utilized for heating, an inert atmosphere is maintained. Thereafter the mass comprised of amalgam and alloy is transferred to a dessicator wherein an inert atmosphere is maintained and the mass is allowed to cool. Upon cooling the resultant block is ready for use.

The entire foregoing procedure should be carried out in an inert atmosphere such as helium or nitrogen and in the absence of contaminants. Oxidation of the metallic components and/or hydroxide formation will "poison" the resulting reactor block and reduce the activity thereof. Moreover, during the steps of process operated at elevated temperature, the presence of any oxygen will cause the mass to ignite.

Formation of reactor block comprising amalgam, catalytic alloy and extender

The amalgam and alloy prepared above and an extender of powdered copper of about 1.7 mm are admixed in the following proportions:

21.775 parts by weight amalgam.
5.625 parts by weight alloy.
72.6 parts by weight copper (extender).

The weighing and blending of the foregoing metallic compounds should be done in an inert atmosphere.

The formation of the reactor block is carried out according to the procedure for the formation of reactor block comprising amalgam and catalytic alloy.

The reactor blocks are contacted with a fine spray of water at about room temperature in an atmosphere environment. The gaseous effluent from said contact comprises hydrogen and oxygen and burns when subjected to electrical sparking. The volume of gas evolved is dependent on reactor block surface area and the volume of water impinging thereon. Generally a 2.5 square cm surface will react with 0.53.$10^{-3}m^3$ of water per minute.

Example 3

Preparation of amalgam

An amalgam comprising 37.688 parts by weight of aluminum, 32.112 parts by weight sodium and 30.2 parts by weight mercury is prepared and formed into a fine powder of about 1.7 mm according to the procedure described in the preceding Examples.

Preparation of catalytic alloy

Starting from 60.7 parts by weight lead, 0.8 parts by weight platinum and 38.5 parts by weight germanium, a fine powder (about 1.7 mm or less) of catalytic alloy was prepared as disclosed in Example 2.

The formation of the intimate amalgam and catalytic alloy admixture, the formation of the reactor block comprising amalgam and catalytic alloy and the formation of the reactor block comprising amalgam, catalytic alloy and extender (copper) are carried out according to the procedure described in the preceding Examples.

The reactor blocks comprising amalgam, catalytic alloy and extender are contacted with a fine spray of water at about room temperature in an atmospheric environment. The gaseous effluent from said contact comprises hydrogen and oxygen and burns when subjected to electrical sparking. The volume of gas evolved is dependent on reactor block surface area and the volume of water impinging thereon. Generally a 2.5 square cm surface will reactor with 0.76 $10^{-3}m^3$ of water per minute.

Example 4

Preparation of amalgam

An amalgam comprising 22.947 parts by weight of aluminum, 18.391 parts by weight sodium and 58.662 parts by weight mercury is prepared as disclosed in Example 2.

Preparation of catalytic alloy

A catalytic alloy is prepared as disclosed in Example 2 from 63.064 parts by weight lead, 0.45 parts by weight platinum, 36.036 parts by weight antimony and 0.45 parts by weight germanium.

Formation of intimate amalgam and catalytic alloy admixture

The formation of this admixture is carried out as disclosed in Example 2.

The admixture may be utilized by immersion in water whereby water is dissociated into hydrogen and oxygen.

Formation of reactor block comprising amalgam and catalytic alloy

The formation of the reactor block comprising amalgam and catalytic alloy is carried out as disclosed in Example 2.

Formation of reactor block comprising amalgam, catalytic alloy and extender

The amalgam and alloy prepared above and a powdered extender comprising 50 wt. % tin and 50 wt. % bismuth of about 1.7 mm are admixed in the following proportions:

21.775 parts by weight amalgam.
5.625 parts by weight alloy.
72.6 parts by weight extender.

The mixture is further treated as disclosed in Example 2.

The reactor blocks thus obtained are contacted with a fine spray of water at about room temperature in an atmospheric environment. The gaseous effluent from said contact comprises hydrogen and oxygen and burns when subjected to electrical sparking. The volume of

gas evolved is dependent on reactor block surface area and the volume of water impinging thereon. Generally a 2.5 square cm surface will react with $0.45.10^{-3}m^3$ of water per minute.

Example 5

Preparation of amalgam

An amalgam comprising 19.383 parts by weight aluminum, 31.068 parts by weight potassium and 49.549 parts by weight mercury is prepared as disclosed in Example 2.

Preparation of catalytic alloy

A catalytic alloy is prepared as disclosed in Example 2 from 42.847 parts by weight lead, 2.429 parts by weight platinum, 42.847 parts by weight antimony, 2.429 parts by weight cadmium and 9.448 parts by weight zirconium.

Formation of intimate amalgam and catalytic alloy admixture

The formation of this admixture is carried out as disclosed in Example 2.

The admixture may be utilized by spraying water on the admixture whereby water is dissociated into hydrogen and oxygen.

Formation of reactor block comprising amalgam and catalytic alloy

The formation of the reactor block comprising amalgam and catalytic alloy is carried out as disclosed in Example 2.

Formation of reactor block comprising amalgam, catalytic alloy and extender

The amalgam and alloy prepared above and an extender of powdered gallium of about 1.7 mm are admixed in the following proportions:

21.775 parts by weight amalgam.

5.625 parts by weight alloy.

72.6 parts by weight gallium.

The mixture is further treated as disclosed in Example 2.

The reactor blocks thus obtained are contacted with a fine spray of water at about room temperature in an atmospheric environment. The gaseous effluent from said contact comprises hydrogen and oxygen and burns when subjected to electrical sparking. The volume of gas evolved is dependent on reactor block surface area and the volume of water impinging thereon. Generally, a 2.5 square cm surface will react with $0.53.10^{-3}m^3$ of water per minute.

Example 6

Preparation of amalgam

An amalgam comprising 37.688 parts by weight aluminum, 32.112 parts by weight cesium and 30.2 parts by weight mercury is prepared as disclosed in Example 2.

Preparation of catalytic alloy

A catalytic alloy is prepared as disclosed in Example 2 from 60.7 parts by weight lead, 0.8 parts by weight platinum and 38.5 parts by weight germanium.

Formation of intimate amalgam and catalytic alloy admixture

The formation of this admixture is carried out as disclosed in Example 2.

The admixture may be utilized by passing steam upwardly therethrough whereby steam is dissociated into hydrogen and oxygen.

Formation of reactor block comprising amalgam and catalytic alloy

The formation of the reactor block comprising amalgam and catalytic alloy is carried out as disclosed in Example 2.

Formation of reactor block comprising amalgam, catalytic alloy and extender

The amalgam and alloy prepared above and an extender of powdered copper of about 1.7 mm are admixed in the following proportions:

21.775 parts by weight amalgam.

5.625 parts by weight alloy.

72.6 parts by weight copper.

The mixture is further treated as disclosed in Example 2.

The reactor blocks are contacted with a fine spray of water at about room temperature in an atmospheric environment. The gaseous effluent from said contact comprises hydrogen and oxygen and burns when subjected to electrical sparking. The volume of gas evolved is dependent on reactor block surface area and the volume of water impinging thereon. Generally a 2.5 square cm surface will reactor with $0.76.10^{-3}m^3$ of water per minute.

Although the invention has been described in detail with respect to specific examples, it will be appreciated that various changes and modifications can be made by those skilled in the art.

**Claims**

1. A material for the generation of hydrogen and possibly oxygen from water which consists of an amalgam of an alkali metal, mercury and aluminum, wherein the atomic ratio of alkali metal to mercury is from 1:100 to 100:1 and the atomic weight ratio of alkali metal to aluminum is from 1:100 to 100:1; possibly combined with an alloy of platinum and at least one element selected from the group consisting of germanium, antimony, gallium, thallium, indium, cadmium, bismuth, lead, zinc and tin.

2. A material as claimed in claim 1, wherein the atomic weight ratio of alkali metal to mercury is from 3:1 to 1:1.5 and the atomic weight ratio of alkali metal to aluminum is from 1:1 to 3:1.

3. A method of preparing a material as claimed in claim 1, which comprises admixing said alkali metal, mercury and aluminum in an inert atmosphere at an elevated temperature

followed by cooling said admixture while maintaining said inert atmosphere to form a solidified amalgam product.

4. A material as claimed in claim 1 for the generation of hydrogen and oxygen from water which consists of an amalgam of an alkali metal, mercury and aluminum wherein the atomic ratio of alkali metal to mercury is from 3:1 to 1:1.5 and the atomic weight ratio of alkali metal to aluminum is from 1:1 to 3:1 combined with an alloy of platinum and at least one element selected from the group consisting of germanium, antimony, gallium, thallium, indium, cadmium, bismuth, lead, zinc and tin.

5. A material as claimed in any one of claims 1, 2 and 4, wherein the alkali metal is sodium or potassium.

6. A material as claimed in claim 4, wherein the alloy consists of platinum and at least one metal selected from the group consisting of germanium, antimony, gallium, thallium, indium and cadmium and the alkali metal of the amalgam is sodium.

7. A material as claimed in claim 6, wherein the alloy consists of platinum and antimony.

8. A material as claimed in claim 6, wherein the alloy consists of platinum and germanium.

9. A material as claimed in any one of claims 4 to 8, wherein the alloy also contains a metal selected from the group consisting of zirconium, chromium and mixtures thereof.

10. A material as claimed in any one of claims 4 to 9, wherein the alloy also contains a metal selected from the group consisting of lead, gold and mixtures thereof.

11. A material as claimed in any one of claims 4 to 10, wherein the alloy also contains copper.

12. A material as claimed in any one of claims 4 to 11, wherein the ratio, by weight, of alloy to amalgam is from 1:1 to 1:5.

13. A material as claimed in claim 12, wherein the ratio, by weight, of alloy to amalgam is from 1:2 to 1:3.

14. A material as claimed in claim 9, wherein the alloy contains from 0.7% to 1.1% by weight chromium.

15. A material as claimed in any one of claims 4 to 10, wherein said alloy comprises platinum present in an amount of from 0.7 to 1.1% by weight, lead present in an amount of from 42.9 to 71.5% by weight, antimony present in an amount of from 25.5 to 42.5% by weight, chromium present in an amount of from 0.7 to 1.1% by weight, zirconium present in an amount of from 4.1 to 6.8% by weight and gold present in an amount of from 1.1 to 1.9% by weight.

16. A material as claimed in claim 15, wherein said alloy comprises about 0.9 wt. % platinum, about 57.3 wt. % lead, about 34.0 wt. % antimony, about 0.9 wt. % chromium, about 5.4 wt. % zirconium and about 1.5 wt. % gold.

17. A process for the generation of hydrogen and possibly oxygen from water which comprises contacting water with a material as claimed in any one of the claims 1, 2 and 4 to 16.

**Revendications**

1. Une composition pour la production d'hydrogène et éventuellement d'oxygène à partir de l'eau qui consiste en un amalgame d'un métal alcalin, de mercure et d'aluminium, dans lequel le rapport atomique du métal alcalin au mercure est de 1:100 à 100:1 et le rapport atomique du métal alcalin à l'aluminium est de 1:100 à 100:1; éventuellement combiné avec un alliage de platine et d'au mouns un élément choisi parmi le groupe formé par le germanium, l'antimoine, le gallium, le thallium, l'indium, le cadmium, le bismuth, le plomb, le zinc et l'étain.

2. Une composition suivant la revendication 1, dans laquelle le rapport atomique du métal alcalin au mercure est de 3:1 à 1:1,5 et le rapport atomique du métal alcalin à l'aluminium est de 1:1 à 3:1.

3. Un procédé de préparation d'une composition selon la revendication 1, qui comprend le mélange desdits métal alcalin mercure et aluminium sous une atmosphère inert à température élevée, cette opération étant suivie d'un refroidissement du mélange tout en maintenant ce mélange sous l'atmosphère inerte de façon à obtenir un amalgame solidifié.

4. Une composition selon la revendication 1, pour la production d'hydrogène et d'oxygène à partir d'eau qui consiste en un amalgame d'un métal alcalin, de mercure et d'aluminium dans lequel le rapport atomique du métal alcalin au mercure est de 3:1 à 1:1,5 et le rapport atomique du métal alcalin à l'aluminium est de 1:1 à 3:1, combiné avec un alliage de platine et d'au moins un élément choisi parmi le groupe formé par le germanium, l'antimoine, le gallium, le thallium, l'indium, le cadmium, le bismuth, le plomb, le zinc et l'étain.

5. Une composition selon l'une quelconque des revendications 1, 2 et 4, dans laquelle le métal alcalin est le sodium ou le potassium.

6. Une composition selon la revendication 4, dans laquelle l'alliage consiste en du platine et au moins un métal choisi parmi le germanium, l'antimoine, le gallium, le thallium, l'indium et le cadmium et le métal alcalin de l'amalgame est le sodium.

7. Une composition selon la revendication 6, dans laquelle l'alliage est formée de platine et d'antimoine.

8. Une composition selon la revendication 6, dans laquelle l'alliage est formé de platine et de germanium.

9. Une composition selon l'une quelconque des revendications 4 à 8, dans laquelle l'alliage contient également un métal choisi parmi le zirconium, le chrome et leurs mélanges.

10. Une composition selon l'une quelconque des revendications 4 à 9, dans laquelle l'alliage

contient également un métal choisi parmi le plomb, l'or et leurs mélanges.

11. Une composition selon l'une quelconque des revendications 4 à 10, dans laquelle l'alliage contient également du cuivre.

12. Une composition selon l'une quelconque des revendications 4 à 11, dans laquelle le rapport en poids de l'alliage à l'amalgame est de 1:1 à 1:5.

13. Une composition selon la revendication 12, dans laquelle le rapport en poids de l'alliage à l'amalgame est de 1:2 à 1:3.

14. Une composition selon la revendication 9, dans laquelle l'alliage contient de 0,7 à 1,1% en poids de chrome.

15. Une composition selon l'une quelconque des revendications 4 à 10, dans laquelle l'alliage comprend du platine à raison de 0,7 à 1,1% en poids, du plomb à raison de 42,9 à 71,5% en poids, de l'antimoine à raison de 25,5 à 42,5% en poids, du chrome à raison de 0,7 à 1,1% en poids, du zirconium à raison de 4,1 à 6,8% en poids et de l'or à raison de 1,1 à 1,9% en poids.

16. Une composition selon la revendication 15, dans laquelle ledit alliage comprend environ 0,9% en poids de platine à environ 57,3% de plomb, environ 34,0% d'antimoine, environ 0,9% en poids de chrome, environ 5,4% en poids de zirconium et environ 1,5% en poids d'or.

17. Un procédé pour la production d'hydrogène et éventuellement d'oxygène à partir de l'eau qui comprend la mise en contact de l'eau avec une composition selon l'une quelconque des revendications 1, 2 et 4 à 16.

**Patentansprüche**

1. Material zur Erzeugung von Wasserstoff und ggf. Sauerstoff aus Wasser, das aus einem Amalgam aus einem Alkalimetall, Quecksilber und Aluminium besteht, wobei das Atomverhältnis von Alkalimetall zu Quechsilber von 1:100 bis 100:1 und das Atomgewichtsverhältnis von Alkalimetall zu Aluminium von 1:100 bis 100:1 betragen; ggf. in Kombination mit einer Legierung von Platin und mindestens einem der Elemente Germanium, Antimon, Gallium, Thallium, Indium, Cadmium, Wismuth, Blei, Zink oder Zinn.

2. Material nach Anspruch 1, wobei das Atomgewichtsverhältnis von Alikalimetall zu Quecksilber von 3:1 bis 1:1,5 und das Atomgewichtsverhältnis von Alikalimetall zu Aluminum von 1:1 bis 3:1 betragen.

3. Verfahren zur Herstellung eines Materials gemäß Anspruch 1, wobei man das Alkalimetall, Quecksilber und Aluminium in inerter Atmosphäre bei erhöhten Temperaturen vermischt, die Mischung anschließend abkühlt, während man die inerte Atmosphäre zur Bildung eines verfestigten Amalgamprodukts beibehält.

4. Material nach Anspruch 1 zur Erzeugung von Wasserstoff und Sauerstoff aus Wasser, das aus einem Amalgam eines Alkalimetalls, Quecksilber und Aluminium besteht, wobei das Atomverhältnis von Alikalimetall zu Quecksilber von 3:1 bis 1:1,5 und das Atomgewichtsverhältnis von Alkalimetall zu Aluminium von 1:1 bis 3:1 betragen, und mit einer Legierung aus Platin und mindestens einem der Elemente Germanium, Antimon, Gallium, Thallium, Indium, Cadmium, Wismuth, Blei, Zink oder Zinn kombiniert ist.

5. Material gemäß einem der Ansprüche 1, 2 oder 4, wobei das Alkalimetall Natrium oder Kalium ist.

6. Material nach Anspruch 4, wobei die Legierung aus Platin oder mindestens einem der Metalle Germanium, Antimon, Gallium, Thallium, Indium oder Cadmium besteht, und das Alkalimetall des Amalgam Natrium ist.

7. Material nach Anspruch 6, wobei die Legierung aus Platin und Antimon besteht.

8. Material nach Anspruch 6, wobei die Legierung aus Platin und Germanium besteht.

9. Material nach einem der Ansprüche 4 bis 8, wobei die Legierung zusätzlich eines der Metalle Zircon, Chrom oder deren Mischungen enthält.

10. Material nach einem der Ansprüche 4 bis 9, wobei die Legierung zusätzlich eines der Metalle Blei, Gold oder deren Mischungen enthält.

11. Material nach einem der Ansprüche 4 bis 10, wobei die Legierung zusätzlich Kupfer enthält.

12. Material nach einem der Ansprüche 4 bis 11, wobei das Gewichtsverhältnis von Legierung zu Amalgam von 1:1 bis 1:5 begrägt.

13. Material nach Anspruch 12, wobei das Gewichtsverhältnis von Legierung zu Amalgam von 1:2 bis 1:3 beträgt.

14. Material nach Anspruch 9, wobei die Legierung von 0,7 bis 1,1 Gewichtsprozent Chrom enthält.

15. Material nach einem der Ansprüche 4 bis 10, wobei die Legierung Platin in Mengen von 0,7 bis 1,1 Gewichtsprozent, Blein in Mengen von 42,9 bis 71,5 Gewichtsprozent, Antimon in Mengen von 25,5 bis 42,5 Gewichtsprozent, Chrom in Mengen von 0,7 bis 1,1 Gewichtsprozent, Zirkon in Mengen von 4,1 bis 6,8 Gewichtsprozent und Gold in Mengen von 1,1 bis 1,9 Gewichtsprozent enthält.

16. Material nach Anspruch 15, wobei die Legierung etwa 0,9 Gewichtsprozent Platin, etwa 57,3 Gewichtsprozent Blei, etwa 34,0 Gewichtsprozent Antimon, etwa 0,9 Gewichtsprozent Chrom, etwa 5,4 Gewichtsprozent Zircon und etwa 1,5 Gewichtsprozent Gold enthält.

17. Verfahren zur Erzeugung von Wasserstoff und ggf. Sauerstoff aus Wasser, wobei man Wasser mit einem Material gemäß einem der Ansprüche 1, 2 und 4 bis 16 kontaktiert.